Europäisches Patentamt

European Patent Office

Office européen des brevets

(19)

(11) Veröffentlichungsnummer: **0 298 902**
**A1**

(12) **EUROPÄISCHE PATENTANMELDUNG**

(21) Anmeldenummer: 88730136.4

(22) Anmeldetag: 14.06.88

(51) Int. Cl.4: **H 02 K 11/00**

(30) Priorität: 26.06.87 DE 3721660

(43) Veröffentlichungstag der Anmeldung:
11.01.89 Patentblatt 89/02

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2 (DE)**

(72) Erfinder: **Meyer, Hartmut, Dr.**
**Eichenallee 13**
**D-1000 Berlin 19 (DE)**

(54) Wicklung für elektrische Maschinen oder Apparate mit Metalloxid-Widerständen zur Überspannungsbegrenzung.

(57) Werden die Spulen (1) von elektrischen Maschinen oder Apparaten durch Metalloxid-Widerstände (10) gegen transiente Überspannungen geschützt, besteht die Gefahr der thermischen Alterung der Metalloxid-Widerstände (10) durch die Verlustwärme der Wicklung. Um die damit verbundene Absenkung der Durchbruchspannung der Metalloxid-Widerstände (10) zu vermeiden, sind diese von einem festen Wärmeisolator (9) aus Kunststoff zumindest teilweise umgeben. Freiliegende Teile der Metalloxid-Widerstände sind im Kühlluftstrom der Maschine angeordnet.

FIG.2

EP 0 298 902 A1

## Beschreibung

## Wicklung für elektrische Maschinen oder Apparate mit Metalloxid-Widerständen zur Überspannungsbegrenzung

Die Erfindung bezieht sich auf eine Wicklung für elektrische Maschinen oder Apparate, die mehrere Spulen aus konzentrischen, gegeneinander isolierten Windungen eines elektrischen Leiters enthält, wobei jede Spule eine elektrische Hauptisolierung aufweist, bestehend aus einer mit Kunstharz getränkten und ausgehärteten, gewickelten Isolierhülse, bei der zum Schutz der Wicklung gegen transiente Überspannungen zumindest einer am Wicklungsanfang liegenden Spule jeweils spannungsabhängige Widerstände, insbesondere Metalloxid-Widerstände, parallel geschaltet sind, die in Klemmennähe am Wicklungsanfang liegen.

Eine derartige Wicklung für elektrische Maschinen oder Apparate ist aus der E - A1 - 00 50 091 bekannt. Bei dieser bekannten Wicklung ist zumindest eine Spule mit der inneren Beschaltung durch Metalloxid-Widerstände gegen das Auftreten hoher flüchtiger Spannungen zwischen den Spulenanschlüssen geschützt.

Es ist bekannt, die Parallelschaltung mit den spannungsabhängigen Widerständen an den durch besonders hohe Stoßspannungen gefährdeten Spulen der Wicklung vorzunehmen, d. h. an den benachbart zu den Klemmen der Maschine oder des Apparates am Wicklungsanfang liegenden Spulen.

Ferner ist aus dem Aufsatz "Stability and Long Term Degradation of Metal Oxide Surge Arresters", veröffentlicht in "IEEE-Transactions on Power Apparatus and Systems", Vol. PAS-99, Nr. 4, Juli/August 1980, bekannt, daß die spannungsabhängigen Widerstände bei hoher Temperatur des Widerstandsmaterials einem Alterungsprozeß unterliegen. Dieser Alterungsprozeß erfolgt durch den geringen Leckstrom, der auch unterhalb der Durchbruchspannung durch das Widerstandsmaterial fließt und der zu einer Erwärmung des Widerstandsmaterials bei angelegter Spannung führt. Durch die thermische Alterung wird für eine Herabsetzung der charakteristischen Durchbruchspannung gesorgt, bei der das Widerstandsmaterial vom schlecht-leitenden in den gut-leitenden Zustand übergeht.

Deshalb kann es durch die bekannte thermische Alterung des Widerstandsmaterials nach längerer Betriebsdauer bei kurzzeitigen, ansonsten ungefährlichen Erhöhungen der Betriebsspannung zu einem vorzeitigen Ansprechen der Metalloxid-Widerstände kommen, was unter Umständen zu ihrer thermischen Überlastung und gegebenenfalls sogar Zerstörung führt.

Werden spannungsabhängige Widerstände innerhalb von elektrischen Maschinen oder Apparaten zur Spannungsbegrenzung vorgesehen, bewirkt die Verlustwärme der elektrischen Maschine oder des elektrischen Apparates ebenfalls eine Erwärmung und Alterung des Widerstandsmaterials unabhängig von der an den Metalloxid-Widerständen anliegenden Spannung.

Der Erfindung liegt die Aufgabe zugrunde, diese thermische Alterung der Metalloxid-Widerstände, die innerhalb einer Wicklung für elektrische Maschinen oder Apparate angeordnet sind und die sich daraus ergebenden Nachteile in einfacher und platzsparender Weise zu verhindern.

Zur Lösung dieser Aufgabe sind bei einer Wicklung für elektrische Maschinen oder Apparate der eingangs beschriebenen Art gemäß der Erfindung die spannungsabhängigen Metalloxid-Widerstände von einem Wärmeisolator aus festem Kunststoff zumindest teilweise umgeben, die thermische Isolation erfolgt gegen den Leiter der Spule und der Wärmeisolator ist in die elektrische Isolierung der Spule eingebettet.

Durch die Umhüllung der Metalloxid-Widerstände mit einem Wärmeisolator werden die Metalloxid-Widerstände in vorteilhafter Weise von dem als Wärmequelle der Spule anzusehenden stromdurchflossenen Leiter thermisch entkoppelt. Üblicherweise erfolgt die Ableitung der Verlustwärme vom elektrischen Leiter der Spule über die elektrische Isolierung an die Umgebung. Durch den in die elektrische Isolierung eingebetteten Wärmeisolator wird aber dafür gesorgt, daß zwischen den heißen Teilen der Spule und den Metalloxid-Widerständen kein guter Wärmeübergang besteht.

Der Wärmestrom vom Leiter der Spule zur Umgebung wird somit um die Metalloxid-Widerstände herumgeleitet und trägt nicht mehr zu deren Erwärmung und einer sich daraus ergebenden thermischen Alterung bei. Somit ist es nicht mehr erforderlich, daß der Wert der Durchbruchspannung der Metalloxid-Widerstände im Neuzustand höher gewählt werden muß und damit der Schutzpegel der parallel zur Spule geschalteten Metalloxid-Widerstände zunächst nach oben verschoben ist. Dadurch wird vermieden, daß die Gefahr des Überschlags an den Eingangsspulen zumindest in der ersten Betriebszeit nach der Herstellung besteht. Die Isolationskoordination für die Wicklung von elektrischen Maschinen oder Apparaten kann somit außerdem einen festen Ansprechpegel der Metalloxid-Widerstände für die gesamte Betriebsdauer voraussetzen. Ebenso ist es ermöglicht, einen ausreichenden Abstand zwischen der höchsten betriebsgewöhnlich auftretenden Spannung und der Durchbruchspannung der Metalloxid-Widerstände für die gesamte Betriebsdauer festzulegen, wodurch der Leckstrom dauerhaft vernachlässigbar klein gehalten ist. Damit werden auch zusätzliche Alterungseffekte durch die an die Metalloxid-Widerstände angelegte Spannung vermieden.

Besonders vorteilhaft ist es, bei nicht vollständiger Umhüllung der Metalloxid-Widerstände durch den Wärmeisolator, die freiliegenden Teile der Metalloxid-Widerstände im Kühlluftstrom liegend anzuordnen.

Dadurch kann eine Zwangskühlung der Metalloxid-Widerstände geschaffen werden, bei der die Metalloxid-Widerstände mit den den heißen Teilen der Wicklung abgewandten Flächen unbedeckt in den Kühlluftstrom gerichtet und gleichzeitig mechanisch stabil am Wicklungsanfang der Spule angebracht werden können. Da die Metalloxid-Widerstände durch die thermische Isolation gegen die externe Erwärmung durch den Spulenleiter geschützt sind und ihre Temperatur sich relativ stabil auf die Temperatur des Kühlluftstromes einstellt, wird eine zur Alterung führende Erwärmung der Metalloxid-Widerstände ausgeschlossen.

Es empfiehlt sich, als Wärmeisolator Kunststoff-Formteile aus wärmebeständigem, geschlossenporigem Hartschaum, z. B. aus Polyimid, zu verwenden. Dies ermöglicht eine einfache Fertigung der Formteile durch Ausschäumen von Gußformen, welche der Geometrie des zur Aufnahme der Metalloxid-Widerstände vorgesehenen Raumes entsprechen. So ist es möglich, die wärmeisolierende Schicht, welche die Metalloxid-Widerstände umgibt, auch einer komplizierten Geometrie der Spulen anzupassen, die durch den Wärmeisolator gegen thermische Alterung geschützten Metalloxid-Widerstände in die Wicklung einzufügen und zugleich eine homogene Schichtung der elektrischen Isolierung zu erhalten. Ferner ist es für die Wärmeisolation von Vorteil, daß das zur Tränkung der Isolierhülse verwendete Kunstharz aufgrund der geschlossenen Poren des Wärmeisolators in diesen nicht eindringen kann.

Es kann zweckmäßig sein, für die Wärmeisolierung der Metalloxid-Widerstände auch Umhüllungen aus Aramid-Faserstoff zu verwenden, die aus vliesähnlichen vorgefertigten Formteilen hergestellt und die während der Isolierung der Spulenleiter an diesen angebracht und von der Spulenisolierung eingeschlossen werden können. Der Aramid-Faserstoff ist besonders geeignet zur thermischen und elektrischen Isolation und erfordert keine geänderten Fertigungshilfsmittel im Vergleich zur üblichen Spulenherstellung. Er weist außerdem gegenüber Wärmeisolatoren aus Hartschaum eine höhere Temperaturbeständigkeit auf, wodurch den Wärmeisolator beeinträchtigende Alterungseffekte vorteilhaft vermieden werden können.

Im folgenden sei die Erfindung noch anhand des in den Figuren 1 bis 3 der Zeichnung dargestellten Ausführungsbeispiels näher erläutert. Fig. 1 zeigt schematisch, Fig. 2 perspektivisch den prinzipiellen Aufbau einer Spule mit einem parallel geschalteten spannungsabhängigen Widerstand, bei welcher der spannungsabhängige Widerstand von einem festen Wärmeisolator teilweise umgeben ist. In Fig. 3 ist die Teilansicht der Spulennase mit dem in die elektrische Isolierung eingebetteten Wärmeisolator vergrößert dargestellt.

Die Spule 1 einer elektrischen Maschine, z. B. eines Asynchronmotors, besteht aus einem Leiter 2 aus rechteckförmigem Profilkupfer, der mit einer nicht dargestellten Windungsisolierung in Form eines Lackauftrages oder einer Umbandelung versehen ist. Die Spule 1 weist zwischen den Anschlußenden 3 fünf Windungen 4 auf. Außerdem ist die gesamte Spule 1 von einer Hauptisolierung 5 umgeben, die aus einer aus Glimmerbändern 6 durchgehend gewickelten Isolierhülse 7 besteht.

Die Isolierhülse 7 wird aus den Glimmerbändern 6 lagenweise durchgehend überlappend gewickelt, und sobald fast alle Lagen der Glimmerbänder 6 aufgebracht sind, wird der Wärmeisolator 9 im Bereich der Spulennase 8 auf die Isolierhülse 7 aufgelegt. Er wird sodann mit den restlichen Lagen der Glimmerbänder 6 an der Spule 1 befestigt, indem der Wärmeisolator 9 und die Spule 1 mit den Glimmerbändern 6 gemeinsam umwickelt werden.

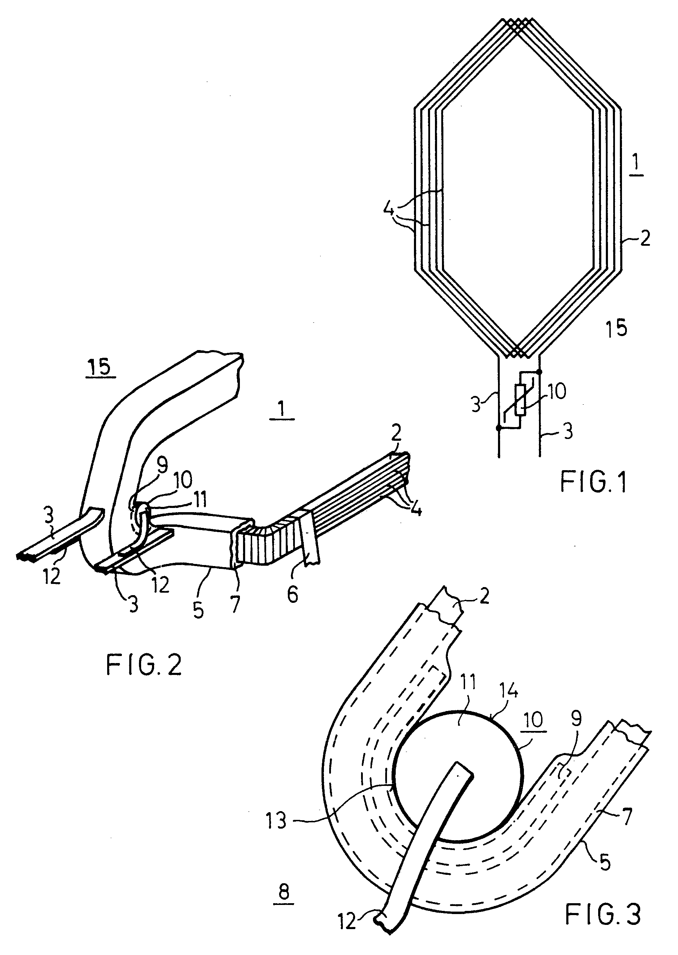

Nach Fertigstellung der Isolierhülse 7 wird diese mit einem aushärtbaren Kunststoff getränkt und ausgehärtet, so daß der Wärmeisolator 9 von der Hauptisolierung 5 umgeben ist (Fig. 3). Die elektrische Hauptisolierung 5 umhüllt damit an der Spulennase 8 nicht nur die Windungen 4 der Spule 1, sondern auch den Wärmeisolator 9. Der feste Wärmeisolator 9 aus Kunststoff ist ein Formteil aus wärmebeständigem, geschlossenporigem Polyimid-Hartschaum. Da das Kunstharz nicht in den Wärmeisolator 9 eindringen kann, bleiben seine wärmeisolierenden Eigenschaften auch nach dem Tränkungs- und Aushärtungsprozeß unverändert erhalten.

Die jeweiligen scheibenförmigen Metalloxid-Widerstände 10 sind in die Spulennase 8 eingesetzt, so daß ein Teil 13 ihrer Mantelfläche an der Hauptisolierung 5 im Bereich des Wärmeisolators 9 anliegt. An den Stirnflächen 11 der Metalloxid-Widerstände 10 liegen zur Kontaktierung dienende Anschlußfahnen 12 an, die mit den Anschlußenden 3 der zu schützenden Spule 1 verlötet sind. Auf diese Weise sind die Metalloxid-Widerstände 10 an der Spule 1 befestigt und ihr somit zugleich zum Schutz gegen Stoßspannungen parallel geschaltet.

Der in die Hauptisolierung 5 eingebettete feste Wärmeisolator 9 aus Kunststoff umgibt den Metalloxid-Widerstand 10 im Teil 13 seiner Mantelfläche an der Spule 1; freiliegend verbleiben dagegen die Stirnflächen 11 mit ihren Anschlußleitern 12 und dem der heißen Spule 1 abgewandten, unbedeckt im Kühlluftstrom liegenden Teil 14 der Mantelfläche des Metalloxid-Widerstandes 10. Dadurch befinden sich diese Teile der Metalloxid-Widerstände 10 unbedeckt im über den Wickelkopf 15 der Maschine geleiteten Kühlluftstrom der Maschine. Die Verlustwärme des Metalloxid-Widerstandes selbst wird damit gleichfalls abgeführt.

Zwischen dem Leiter 2 der Spule 1 mit seiner hier nicht dargestellten Windungsisolierung und dem Metalloxid-Widerstand 10, liegt der Wärmeisolator 9. Die Verlustwärme des Leiters 2 kann aber wegen des Wärmeisolators 9 nicht zum Metalloxid-Widerstand 10 gelangen. Die Abführung der Verlustwärme des Leiters 2 erfolgt vielmehr über die Hauptisolierung 5 nach außen, weil die Wärmeleitfähigkeit der Hauptisolierung 5 wesentlich größer ist als die des Wärmeisolators 9 aus Polyimid-Hartschaum. Damit ist sichergestellt, daß der Metalloxid-Widerstand 10 hauptsächlich über die Stirnflächen 11 und die Teile 14 seiner Mantelfläche auf der Temperatur des Kühlluftstromes in der elektrischen Maschine gehalten wird. Der Wärmeübergang von den Anschlußenden 3 der Spule 1 über die Anschlußleiter 12 auf die Stirnflächen 11 des Metalloxid- Widerstandes 7 kann weitgehend vernachlässigt werden, weil die Anschlußleiter 12 ebenfalls ohne Wärmeisolation frei im Kühlluftstrom liegen. Damit kann die Temperatur der Metalloxid-Widerstände 10 nur begrenzt ansteigen, und eine Alterung sowohl durch die Erwärmung aufgrund des Leckstromes als auch aufgrund der Verlustwärme der Wicklung ist vermieden.

**Patentansprüche**

1. Wicklung für elektrische Maschinen oder Apparate, die mehrere Spulen (1) aus konzentrischen, gegeneinander isolierten Windungen (4) eines elektrischen Leiters (2) enthält, wobei jede Spule (1) eine elektrische Hauptisolierung (5) aufweist, bestehend aus einer mit Kunstharz getränkten und ausgehärteten, gewickelten Isolierhülse (7), bei der zum Schutz der Wicklung gegen transiente Überspannungen zumindest einer Spule (1) jeweils spannungsabhängige Widerstände (10), insbesondere Metalloxid-Widerstände (10), parallel geschaltet sind, die in Klemmennähe am Wicklungsanfang liegen, **dadurch gekennzeichnet,** daß die spannungsabhängigen Widerstände (10) von einem festen, in die elektrische Hauptisolierung (5) eingebetteten Wärmeisolator (9) aus Kunststoff zumindest teilweise umgeben sind, und daß die thermische Isolation gegen den Leiter (2) der Spule (1) erfolgt.

2. Wicklung nach Anspruch 1, **dadurch gekennzeichnet,** daß bei nicht vollständiger Umhüllung der Metalloxid-Widerstände (10) durch den Wärmeisolator (9) die freiliegenden Teile der Metalloxid-Widerstände (10) im Kühlluftstrom liegen.

3. Wicklung nach Anspruch 1 oder 2, **dadurch gekennzeichnet,** daß als Wärmeisolator (9) Kunststoff-Formteile aus wärmebeständigem, geschlossenporigem Hartschaum verwendet sind.

4. Wicklung nach Anspruch 1 oder 2, **dadurch gekennzeichnet,** daß als Wärmeisolator (9) Umhüllungen aus Aramid-Faserstoff verwendet sind.

0298902

FIG.1

FIG.2

FIG.3

Europäisches Patentamt

**EUROPÄISCHER RECHERCHENBERICHT**

Nummer der Anmeldung

EP 88 73 0136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 456 844  (YAMAMOTO et al.) <br> * Insgesamt * <br> --- | 1 | H 02 K  11/00 |
| A | PATENT ABSTRACTS OF JAPAN, Band 5, Nr. 7 (E-41)[679], 17. Januar 1981; & JP-A-55 138 214 (TOKYO SHIBAURA DENKI K.K.) 28-10-1980 <br> * Insgesamt * <br> --- | 1 | |
| A | PATENT ABSTRACTS OF JAPAN, Band 6, Nr. 52 (E-100)[930], 7. April 1982; & JP-A-56 166 745 (MATSUSHITA DENKO K.K.) 22-12-1981 <br> * Insgesamt * <br> --- | 1,2 | |
| A | US-A-4 636 910  (CHADWICK) <br> * Zusammenfassung * <br> --- | 1 | |
| D,A | EP-A-0 050 091  (SIEMENS) <br> * Insgesamt * <br> ----- | 1 | |

**RECHERCHIERTE SACHGEBIETE (Int. Cl.4)**

H 02 K  11/00
H 02 H   7/00
H 02 H   9/00

Der vorliegende Recherchenbericht wurde für alle Patentansprüche erstellt

| Recherchenort | Abschlußdatum der Recherche | Prüfer |
|---|---|---|
| DEN HAAG | 11-10-1988 | LE GUAY P.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)